# EUROPEAN PATENT SPECIFICATION

(11) **EP 1 636 087 B1**
(45) Date of publication and mention of the grant of the patent: **25.04.2007**
(21) Application number: 04742965.9
(22) Date of filing: 18.06.2004
(51) Int. Cl.: B64D 11/00, B64D 11/06

(54) **A STOWABLE TABLE FOR A VEHICLE**
VERSTAUBARER TISCH FÜR EIN FAHRZEUG
TABLETTE PLIABLE POUR VEHICULE

(30) Priority: 23.06.2003 GB 0314608
(43) Date of publication of application: 22.03.2006
(73) Proprietor: Virgin Atlantic Airways Limited, Crawley, West Sussex RH10 2NU (GB)
(72) Inventor: LAWLER, Andrew, Leslie, Aylesbury, Buckinghamshire HP19 9LY (GB); STARKEY, David, Edward, Princes Risborough, Bucks. HP27 9AS (GB)
(74) Representative: Hector, Annabel Mary
(86) International application number: PCT/GB2004/002610
(87) International publication number: WO 2004/113168

(56) References cited:
- EP-A- 0 869 060
- WO-A-96/18537
- WO-A-03/013903
- DE-A- 19 822 694
- DE-U- 29 908 621
- FR-A- 2 002 957
- GB-A- 2 331 237
- GB-A- 2 362 095
- US-A- 2 132 279
- US-A- 3 583 760
- US-A- 4 944 552

## Description

The present invention relates to a stowable table for a vehicle, particularly a passenger aircraft.

It is commonplace in the art to provide each passenger on a vehicle such, for example, as a passenger aircraft with a stowable table, particularly, but not exclusively, for the purpose of supporting receptacles for food or drink which the passenger may consume during the course of a journey. Generally, such a stowable table should provide a table surface which is sufficiently large to accommodate the food and drink receptacles with which the passenger will be provided during the journey, and should be stowable to provide the passenger with more room when the table is not required and, in the case of an aircraft, for take-off and landing. Furthermore, such a table should also be sufficiently large to provide a convenient working surface, especially for business-class passengers.

US 2,132,279, which shows all the features of the preamble of the independent claim 1, discloses a vehicle seat table incorporated in a seat back and extendable from an out-of-the way (stowed) position to a position allowing use. The table may be adjusted in height and extent towards the seat next rearward thereof.

In a conventional passenger aircraft cabin arrangement, a plurality of seats are arranged in rows, one row behind another, with the seats in the different rows being aligned with one another, such that, except in the front row, each seat has another seat directly in front of it. Where the rows are sufficiently closely spaced (i.e. have a relatively small pitch) a table associated with a seat may be conveniently mounted on the back of a seat in front. Such a table may be stowed by folding it flat against the back of the seat in front, and may be deployed when required by folding it down to a substantially horizontal orientation, over the knees of the passenger using the seat. Stowable tables of this kind are, however, only practical when the pitch between adjacent rows of seats is sufficiently small.

Rows of seats in business-class and first-class sections of the passenger aircraft are typically set at greater pitch than the rows in an economy class cabin, and typically comprise more elaborate seats including more substantial arm-rests on each side of the seat. For such seats, it has become commonplace to provide a stowable table in one of the arm-rests and numerous different mechanisms are known in the art for deploying a table from an arm-rest to a substantially horizontal position in which it extends over the knees of a passenger using the seat, so that it is conveniently positioned for the passenger to work on a table, or to support crockery, glassware, trays, and the like for meals.

Recently, more innovative seat designs have been developed especially for use in the business and first-class cabins of passenger aircrafts. Whilst such seats are still generally arranged in rows which extend across the width of a passenger aircraft cabin, they are quite often arranged at an angle to the front-to-back axis of the cabin, such that each seat does not have another seat directly in front. Furthermore, as before, the pitch between adjacent rows of such seats is typically too great to enable a seat in front to provide a suitable support for a table to be used by a passenger using a seat behind. Examples of such seating systems are disclosed in WO 96/18537 A1 and WO 03/013903 A1. A common feature of such designs is the provision of a shaped screen disposed on at least one side of each seat to shield each seat at least partially from its neighbouring seat(s), and to give each passenger a well-defined, personal cabin space.

Whilst there has therefore been significant development in the field of seat design, there has been relatively little progress in the design of stowable tables for seats.

Clearly, the size and style of a table to be stowed in an arm rest is dictated to a large extent by the size of the arm rest. As a result, such tables tend to be fairly small, and are typically fairly insubstantial in that in order to be stowed within the arm rest they must comprise a plurality of folding parts, and this tends to reduce the overall stability and rigidity of the table. Furthermore such tables must usually be supported by the other arm rest to provide some degree of stability.

A number of recent seat designs for business class and/or first class passengers comprise a "buddy seat" associated with each main seat, which "buddy seat" may be used temporarily in-flight by another passenger who is visiting the passenger using the main seat. In some designs, the "buddy seat" may also be used as a foot-stool. Clearly, it would be desirable for airlines to provide such a visiting passenger with the possibility of dining with the passenger he or she is visiting at the main seat. However, for this, a table which deploys only over the knees of the passenger using the main seat would be undesirable, and a table of greater size would be needed to provide sufficient room for two meals.

WO 96/18537 A1 discloses a seat unit for a first-class section of a passenger aircraft, which seat unit comprises a primary seat and an opposing secondary "buddy seat". A stowable table is accommodated within a table storage portion of a wall positioned adjacent the seat unit, which table can be selectively deployed between the primary and secondary seats *via* an access slot in the wall. In the deployed position the table is cantilevered from the table storage portion. However the overall size of the table is limited by the space available within the table storage portion, and in the deployed position the cantilever between the table and the wall is relatively unstable, limiting the load that can be supported by the table.

An object of the present invention is to provide a novel stowable table for a vehicle, particularly a passenger aircraft.

Another object of the prevent invention is to provide a stowable table for a vehicle which, when deployed, is stable and capable of bearing significant loads.

Yet another object of the present invention is to provide a stowable table for a vehicle, particularly an aircraft, which is larger than conventional aircraft meal tables, and in particular is sufficiently large to accommodate easily the meals of two passengers at the same time.

According to one aspect of the prevent invention therefore there is provided a stowable table for a vehicle, particularly an aircraft, said stowable table comprising:
mounting means adapted to be fixedly secured to a supporting structure;
table-top means comprising a table-top member;
connecting means for connecting said table-top means to said mounting means, said connecting means comprising guiding means which are adapted to allow the table-top means to a slide substantially vertically with respect to the mounting means when fitted between a first lower stowed position and second upper deployed position, and to allow said table-top means to rotate about a substantially horizontal axis between a stowed upright orientation when in the first stowed position, and a substantially horizontal deployed orientation when in the deployed position; and
cantilevering means for cantilevering the table-top means from the mounting means in the upper deployed position such that said table-top means are capable of bearing loads in the deployed orientation, said cantilevering means comprising engaging means on the table-top means, and abutment means on the mounting means; said engaging means and abutment means being configured and arranged to engage one another when the table-top means are rotated to the deployed orientation in the deployed position; and said guiding means being further adapted to locate the table-top means in the upper position, such that said engaging means and abutment means engage one another stably when the table-top means are rotated to the deployed orientation,
said table-top means comprising means for connecting said table-top member to said guiding means and providing lateral reciprocal movement of said table-top member relative to said mounting means when said table-top means are disposed in the deployed position and orientation, said table-top connecting means being arranged to allow said table-top member to slide in a direction substantially parallel to the axis,
said table-top connecting means further comprising a sub-frame, and means for slidably mounting said table-top member on said sub-frame so as to allow said table-top member to slide reciprocally relative to the sub-frame in a direction substantially parallel to the axis; said slidable mounting means comprising a plurality of spaced, substantially parallel guide rails on one of said table-top member and said sub-frame, and linear bearings on the other said sub-frame and said table-top member for bearing said guide rails.

Thus, in accordance with the present invention, the stowable table may comprise dedicated abutment and engaging means for cantilevering the table-top means from the mounting means in the deployed position and deployed orientation, and the guiding means may serve to locate the table-top means stably in the upper position, so as to allow the abutment means and engaging means to engage one another stably and effectively for supporting, by means of a cantilever, the weight of the table-top means.

Said engaging means may comprise a plurality of formations on the table-top means, which formations may be adapted to rotate with the table-top means.

Said abutment means may comprise a plurality of corresponding abutment plates.

In some embodiments, said formations and abutment plates may be made from suitable non-resilient, hard, load-bearing materials such as steel.

Said table-top member and said formations may be arranged such that when said table-top means are disposed in the deployed orientation, said table-top member projects in a forwards direction from said horizontal axis, and said formations project generally forwardly from said axis and in a generally opposite rearwards direction from said axis; said corresponding abutment means being disposed generally in front of and behind said axis, such that in the deployed position and orientation, said mounting means react on the table-top means through said abutment means at spaced positions at either said of the axis for effectively cantilevering the table-top means.

Said table-top means may comprise a rotatable shaft, said table-top member being connected to the shaft, and said shaft being disposed on said substantially horizontal axis; said formations may be fixedly mounted on the shaft. Said shaft may comprise a ball-spline.

The stowable table in accordance with the invention may be suitable for mounting in a recess formed in an hollow side-wall forming part of a seat housing around a seat. Typically such a side-wall comprises internal supporting structure fixed to the infrastructure of the vehicle (e.g. through seat tracks on an aircraft) and is clad in suitable panelling. In accordance with the present invention, said panelling may have a shaped opening formed therein to provide access to the interior of the side-wall, and the mounting means may be fixedly secured to said supporting structure. Advantageously, the stowable table in accordance with the present invention, in the stowed position and orientation, may occupy a small footprint area, allowing the table to be accommodated within relatively thin side walls. By providing engaging formations which project forwardly and rearwardly of the horizontal axis when the table-top means are oriented in the deployed orientation, maximum use of the available width of the side wall may be obtained, such that the mounting means react on the table-top means through the abutment means at locations which are spaced apart on either side of the axis.

In the stowed position, the table-top member may occupy substantially the whole of the opening formed in the side wall, with a small tolerance, so as to close the opening. Said table-top member may have a lower surface which is arranged to face outwardly in the stowed position, which surface may be disposed flush with the surface of the panelling of the side wall in the stowed position.

Said guiding means may comprise track means on the mounting means, and corresponding track-following means on the table-top means, which track following means are constrained to slide along the track means for guiding the table-top means between the stowed and deployed positions. Said guiding means may thus provide controlled translational movement of the table-top means between the stowed and deployed positions.

Said track means may comprise two spaced, upright tracks, and said track following means may comprise two corresponding rollers on the table-top means. Each of said rollers may be arranged to engage in a corresponding one of the upright tracks. It is unnecessary for the tracks to be vertical in the fitted position, but they should extend vertically such that as the table-top means move from the stowed position to the deployed position they move *inter alia* in a vertical direction.

Said track following means may be positioned on the horizontal axis.

Accordingly, said rollers may define the axis of rotation of the table-top means.

Said guide means may further comprise means for controlling rotation of the table-top means according to the position of the table-top means between the lower stowed position and the upper deployed position. Thus, as the table-top means are moved between the lower stowed position and the upper deployed position, the orientation of the table-top means is controlled automatically.

Said rotation controlling means may comprise shaped cam means on the mounting means and corresponding cam-following means on the table-top means; wherein said cam means and said cam-following means are configured and positioned relative to the track means and track following means to position the table-top means in the stowed orientation when in the stowed position, and in the deployed orientation when the in the deployed position.

Said cam means may be configured to cause progressively greater rotation of the table-top means about said horizontal axis from the stowed orientation to the deployed orientation as the table-top means move from the lower stowed position to the upper deployed position.

It is unnecessary for the table-top means to be rotated by the rotation controlling means at a fixed or constant rate as the table-top means move translationally from the lower stowed position to the upper deployed position. The rotation controlling means may be adapted to rotate the table-top means to any desired orientation at each point between the upper and lower positions. For instance, in some installations, it may be desirable for the table-top means to move initially from the stowed position towards the deployed position without any significant rotation in order to ensure that the table-top member is moved clear of any adjacent, low-lying objects such, for example, as a foot-stool or the like. In some embodiments, the rotation of the table-top means from the stowed orientation to the deployed orientation may take place substantially wholly in an upper section of movement of the table-top means from the stowed position to the deployed position. However, in order to provide effective location of the table-top means in the upper position, it is desirable for at least the final rotational movement of the table-top means into the fully deployed orientation to take place progressively over a sufficient length of the translational movement.

Said track following means may be positioned on the horizontal axis, and said cam following means may be offset from said axis; said track means and cam means may extend generally upwardly from respective lower ends to respective upper ends when fitted to said supporting structure, and said cam means may diverge from the track means as they extend from their lower end to their upper end to cause progressively greater rotation of the cam following means about said axis so as to cause the table-top to rotate from the stowed orientation to the deployed orientation as it moves from the stowed position to the deployed position.

In some embodiments, said cam means may be inclined upwardly and rearwardly with respect of the track means.

Said connecting means may further comprise means for counter-balancing the weight of the table-top means as they move between the stowed and deployed positions. A number of different devices for counter-balancing the weight of the table-top means will be apparent to those skilled in the art, but in some embodiments a constant force spring mechanism connected between the table-top means and the mounting means may be employed.

Said guiding means may further comprise two spaced racks on the mounting means, which racks extend substantially vertically when fitted to the supporting structure, and two corresponding, freely-rotatable pinions mounted on the table-top means on said horizontal axis in engagement with the racks, thereby to obtain smooth movement of the table-top means between the upper and lower positions. In particular, the interengagement of the racks and pinions as the table-top means move between the upper and lower positions may prevent "crabbing" of the table-top means.

Said slidable mounting means may comprise two guide rails, one guide rail being supported by two spaced bearings on said sub-frame or table-top member, and the other guide rail being supported by only one bearing, thereby to alleviate juddering when the table-top member slides relative to the sub-frame.

The table-top connecting means may comprise a ball spline connected to said guiding means, the sub-frame being connected to the ball spline.

A ball spline is a device which is capable of transmitting substantial torques whilst facilitating translational movement along the torque axis. It is envisaged that any other devices that are mechanically similar or equivalent to a ball spline may be used.

Thus, lateral movement of the table-top member relative to the mounting means may be provided by two different mechanisms which act cumulatively. Firstly, the sub-frame is able to slide laterally with respect to the mounting means on the ball spline, and secondly the table-top member itself is able to slide laterally with respect to the sub-frame on the guide rails.

Said table-top connecting means may further comprise two pulleys, each of which is connected to the sub-frame for rotation about a pulley axis which is substantially orthogonal to the direction of sliding of said table-top member; and two cables, each of which is connected at one end to a respective end of the ball spline, extends around and is reversed by a respective one of the pulleys, and is connected at its other end to a respective opposite end of the table-top member, the arrangement being such that movement of the sub-frame on the ball spline causes corresponding movement of the table-top member in the same direction relative to the sub-frame.

The pulleys and cables thus function as a "block and tackle" type mechanism with a ratio of 2:1. Thus, for each distance *d* moved by the sub-frame on the ball spline, the table-top member moves a distance *d*/*2* on the guide rails, providing a total lateral movement of *3*/*2 d.*

The two-component lateral movement of the table-top member in accordance with the present invention allows the table-top member to slide relative to the mounting means by a distance greater than the size of the opening in the side wall would allow with a one-component system.

Said ball spline may comprise a shaft and reciprocating nut adapted to travel along the shaft; said shaft being formed with a locating depression at a centre point, and said nut comprising spring loaded follower that is adapted to enter said depression when the nut is positioned at the centre point. Said follower may comprise an engaging member that is arranged normally to engage a corresponding abutment provided on said mounting means so as to prevent rotation of the table-top means from the deployed orientation to the stowed orientation, except when the nut is positioned at the centre point where entry of the follower into the depression causes the engaging member to disengage from the abutment, thereby to allow the table-top means to be returned to the stowed orientation at the centre point.

Following is a description by way of example only with reference to the accompanying drawings of embodiments of the present invention.

In the drawings:
FIG. 1A is a schematic drawing of a stowable tray-table in accordance with the present invention, shown *in situ* in a stowed position.
FIG. 1B is another schematic drawing of the stowable tray-table of FIG. 1A, shown in an intermediate position between the stowed position of FIG. 1A and a deployed position.
FIG. 1C is another schematic drawing of the stowable tray-table of FIGS. 1A and 1B, shown in the deployed position.
FIGS. 2A & 2B are schematic drawings of the stowable tray-table of FIGS. 1A to 1C in the deployed position, showing lateral reciprocal movement of the tray table in the deployed position.
FIG. 3 is an isometric view from above and to one side of the front of a stowable tray table in accordance with the present invention, shown in the deployed position.
FIG. 4 is a plan view of the stowable tray table of FIG. 3.

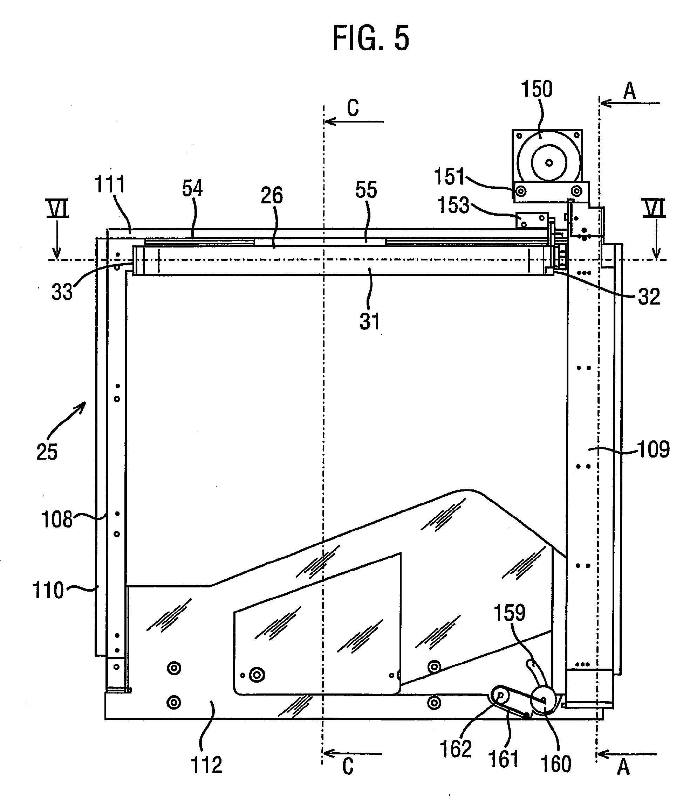

FIG. 5 is a front elevation of the tray table of FIGS. 3 and 4.
FIG. 6 is a sectional plan view of the tray table of FIGS. 3 to 5, corresponding to FIG. 4, and shown along the line VI-VI of FIG. 5.
FIG. 7 is an isometric view from above and to one side of the front of the stowable tray table of FIGS. 3 to 6, with the table-top removed to show the sub-frame and lateral reciprocating mechanism.

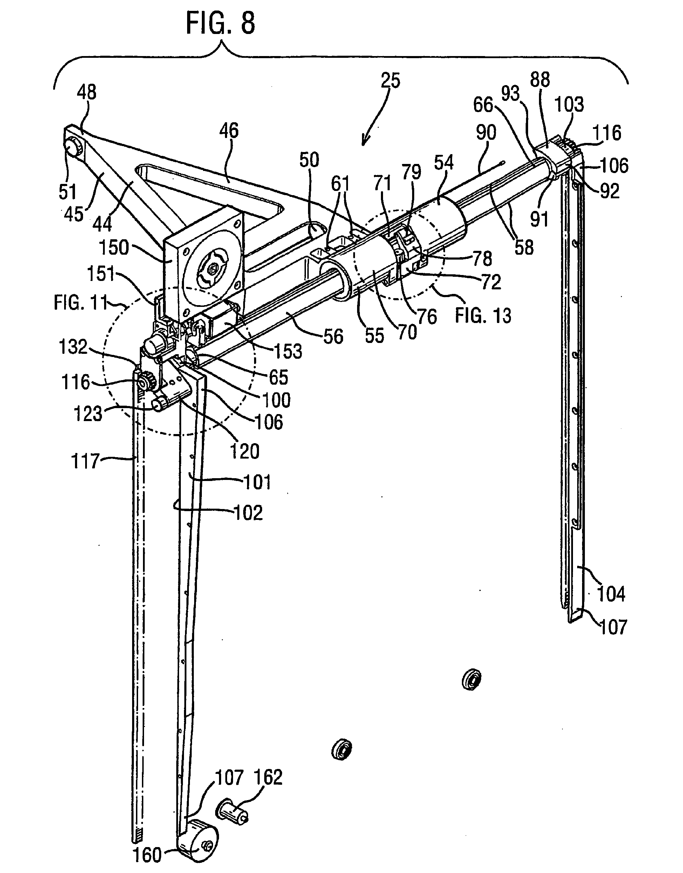

FIG. 8 is another isometric view of the tray table of FIGS. 3 to 7, from above and to the other side of the rear of the tray-table.
FIG. 9 is a sectional view from above of one end of a ball-spline forming part of the tray table mechanism.
FIG. 10 is a sectional view from above of another end of the ball-spline.
FIG. 11 is an isometric view from above and to the other side of the other end of the ball spline.
FIG. 12 is an isometric view from above and to the one side of the front of the one end of the ball spline.

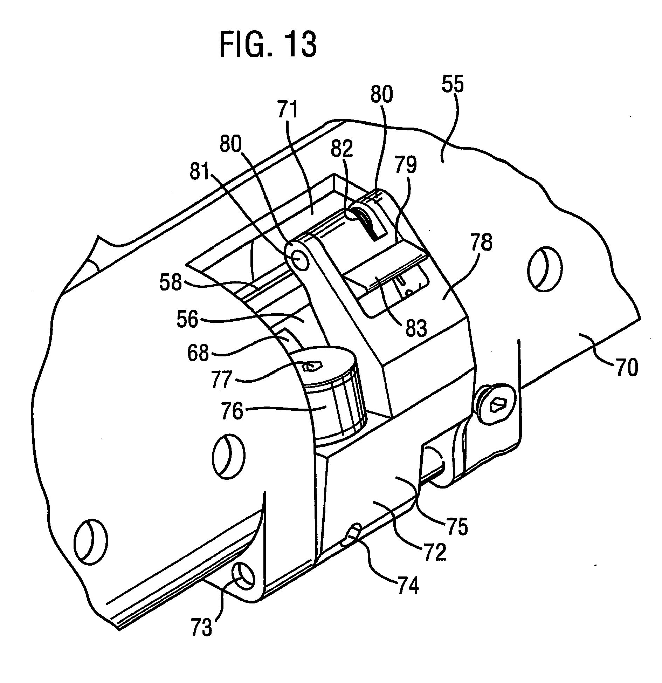

FIG. 13 is an isometric view above and to one side of the rear of a nut forming part of the ball-spline.
FIG. 14 is a sectional side view of the tray table of FIGS. 3 to 8 along the line A-A of FIG. 5.
FIG. 15 is an enlarged view of part of FIG. 14.

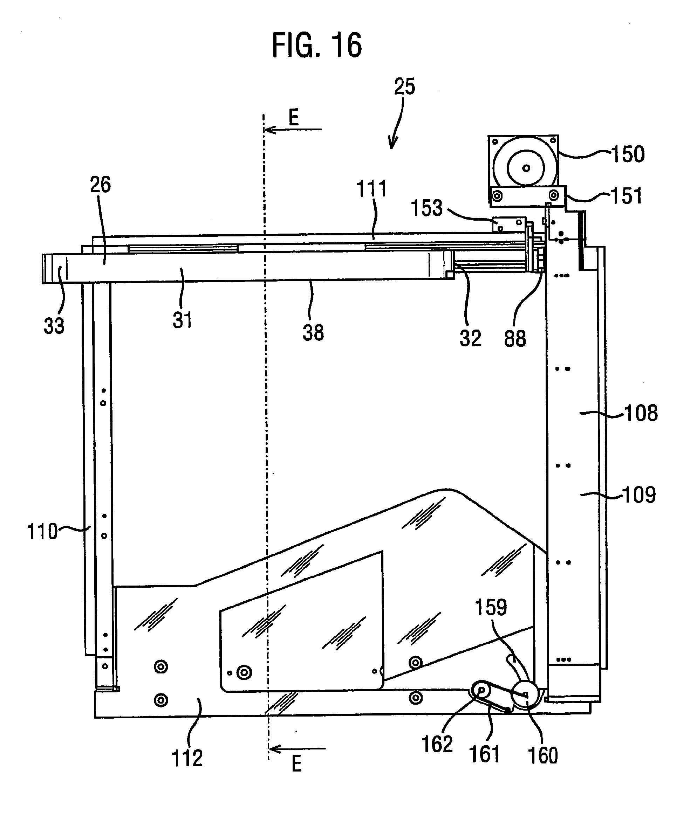

FIG. 16 is a front elevation of the stowable tray table of FIGS. 3 to 8 in the deployed position, with the table-top displaced laterally from a centre position, as shown in FIG. 2A.
FIG. 17 is a sectional side view of the tray table of FIG. 16 along the line E-E.
FIG. 18 is an enlarged part of FIG. 17.
FIG. 19 is a sectional side view of the tray table of FIGS. 3 to 8 along the line C-C of FIG. 5, with the table-top in the centre position.
FIG. 20 is an enlarged view of part of FIG. 19.

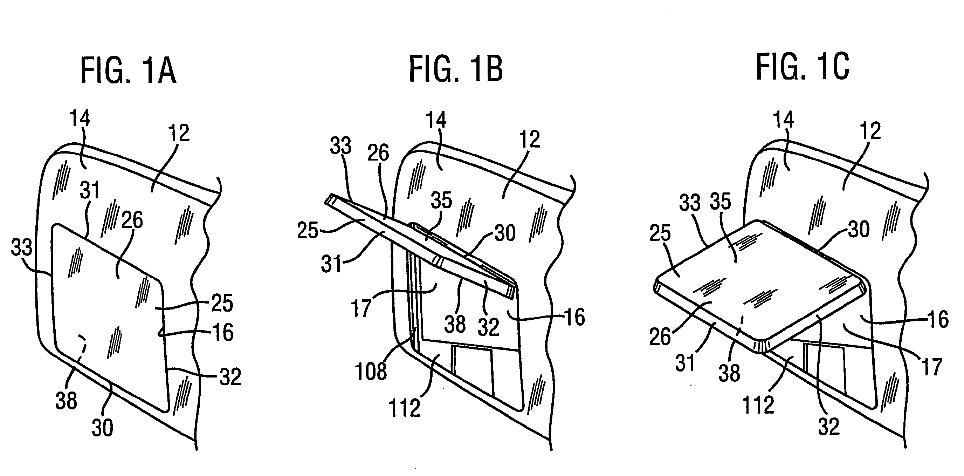

FIGS. 1A to 1C show part of an upstanding side wall 12 of a seat unit for use on a vehicle, particularly a passenger aircraft. Such seat units are disclosed, for example, by WO 03/013903 A1 and WO 96/18537 A1:
   and need not be described in more detail herein. Said side-wall 12 may extend around all or part of a seat for use by a passenger on the vehicle and may extend vertically sufficiently high for it to serve as privacy screen.

Said side-wall typically comprises a hollow, load-bearing, aerospace grade steel sub-frame (not shown) which is clad with one or more shaped composite panels 14. The cladding 14 of the side wall 12 is cut-out to form a generally square or rectangular opening 16 which communicates with the interior of the panel 12 to form an internal recess 17. In accordance with the present invention, said recess 17 accommodates a stowable tray-table assembly 25 comprising a table-top 26 which is mounted within the recess 17 on a mounting frame as described in more detail below, and is shaped and dimensioned to fill opening 16 in the side panel 12 as shown in FIG. 1A.

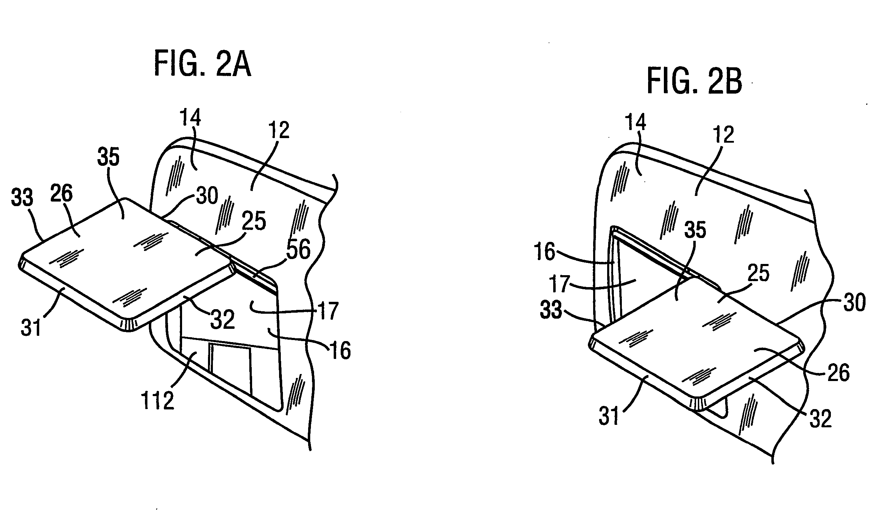

Said table-top 26 comprises a hollow fabrication having opposite inner and outer edges 30 and 31 respectively, and two opposite side edges 32, 33. The table-top 26 is mounted on the mounting frame such that it is moveable between a stowed position as shown in FIG. 1A and a deployed position as shown in FIG. 1C in which the table-top 26 projects forwardly of the side wall 12. FIG. 1B shows an intermediate position in which the table-top 26 is not fully deployed. The mounting also allows lateral reciprocal movement of the table-top 26 in a direction substantially parallel to the inner and outer edges 30, 31 as shown in FIGS. 2A and 2B, which show respectively the opposite extremities of the reciprocal movement of the table-top 26. As can be seen in FIGS. 1C and FIGS. 2A and 2B, in the deployed position, the table-top is cantilevered from the side wall 12 such that is projects forwardly from the side wall 12, and the reciprocal lateral movement as shown in FIGS. 2A and 2B allows the table to be conveniently moved sideways nearer to or further away from a passenger using the seat unit of which the side wall 12 forms part.

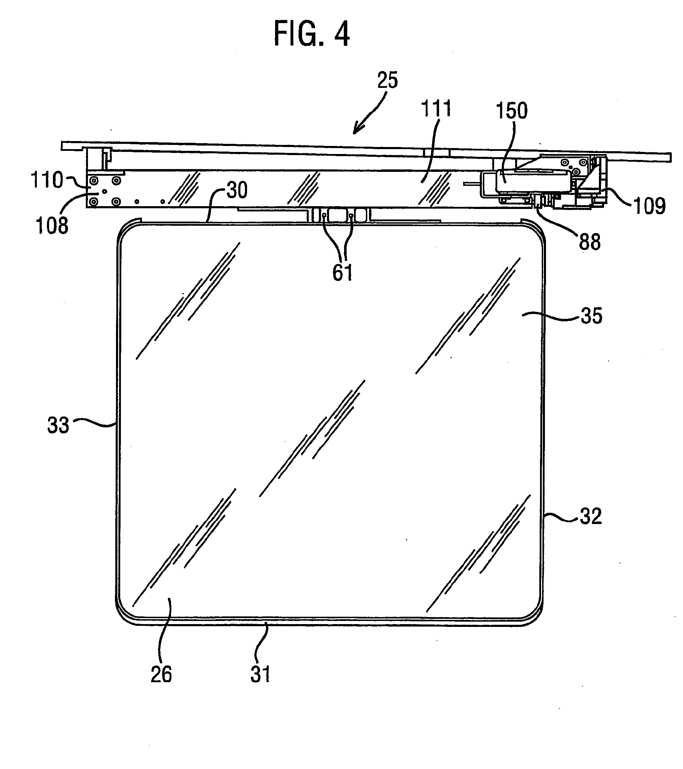

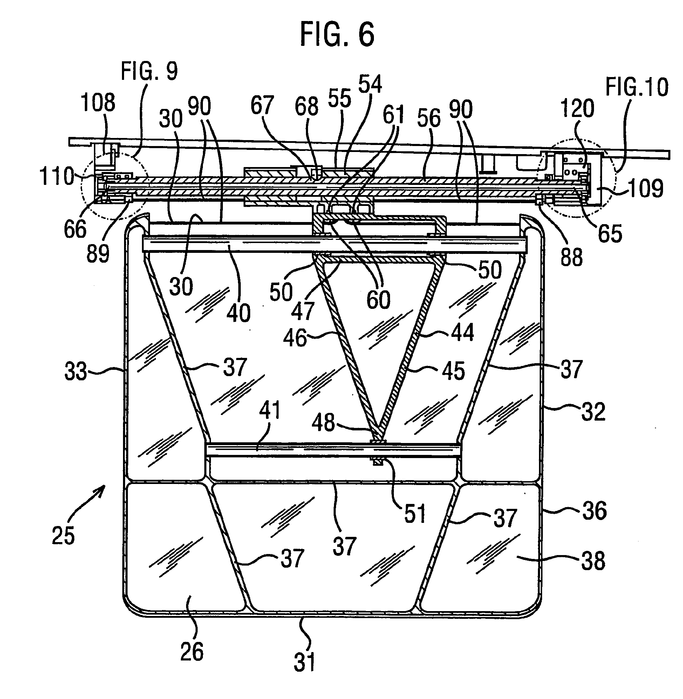

With reference to FIGS. 4 and 6, the table-top 26 may be moulded from a substantially rigid synthetic resin material such, for example as a thermoplastic or thermosetting resin, and has a generally rectangular or square, flat upper wall 35, a peripheral skirt 36 that extends around the two side edges 32, 33 and the outer edge 31, a plurality of internal reinforcing ribs 37, and a flat lower wall 38; the ribs 37 extend between the upper and lower walls 35, 38 within the table-top 26 in a manner well known to those skilled in the art in order to strengthen the table-top 26. The inner edge 30 is left open allowing access to the interior of the table-top 26.

The ribs 37 carry two spaced, parallel guide rails 40, 41 which extend substantially parallel to the inner and outer edges 30, 31 of the table-top 26, each of said guide rails is constituted by an hollow aluminium tube of substantially circular cross-section; the guide rails 40, 41 are fixedly secured to the table-top 26.

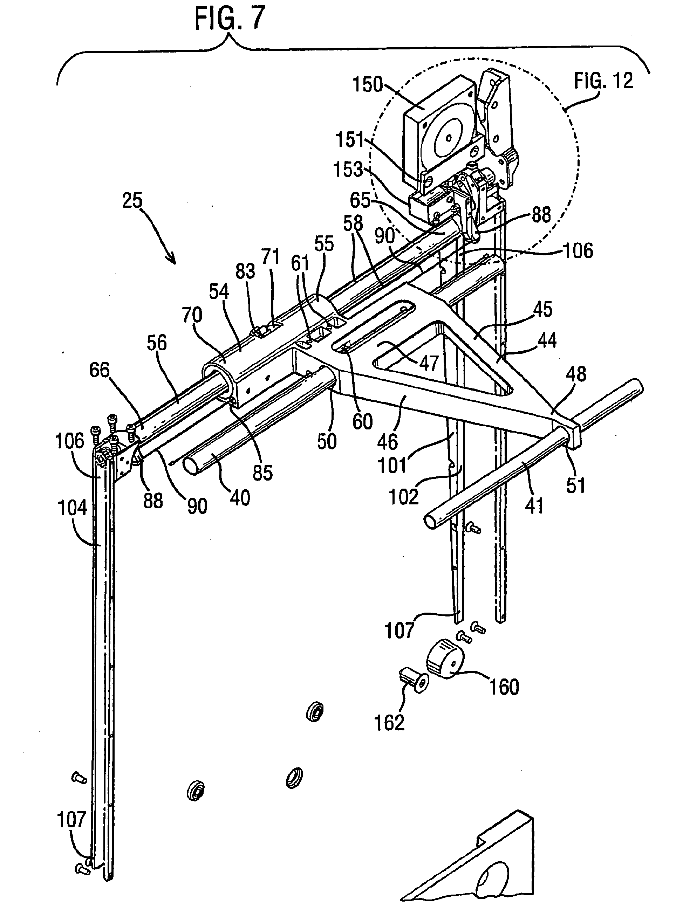

As shown in FIGS. 6 and 7, said tubes 40, 41 are supported slidingly by a generally triangular sub-frame 44 which extends into the interior of the table-top through the open inner edge 30, said sub-frame comprising two side members 45, 46 and a base member 47. Said base member 47 is disposed juxtaposed said inner edge 30, and the two side members extend from the base member 47 towards the outer edge 31 and converge with one another to an apex 48. Said base member 47 comprises two spaced bearings 50 for the one guide rail 40, and the other guide rail 41 extends through the apex 48 of the sub-frame 44, where it is supported by a single bearing 51. The table-top 26 is thus able to slide laterally in a direction substantially parallel to the inner and outer edges 30, 31 relative to the sub-frame 44, and the use of only one bearing 51 on the other guide rail 41 prevents juddering of the table-top 26 when it is slid.

The sub-frame 44 is connected to a ball-spline 54 adjacent the table-top 26, said ball-spline comprising a slidable nut 55 and a splined shaft 56 defining a longitudinal axis, which shaft 56 comprises a plurality of circumferentially spaced, longitudinal splines 58, the splines 58 cooperating with the nut 55 to prevent rotation of the nut about the shaft 56. As those skilled in the art will be aware a ball-spline is a device which is capable of transmitting substantial torques while allowing smooth, unhindered translational movement. Said slidable nut 55, and said shaft 56 are typically made from steel; in some embodiments said sub-frame may be made from an aluminium alloy.

Intermediate the sub-frame 44 and the slidable nut 55, the sub-frame and/or nut carries two pulleys 60. Said pulleys 60 are rotatably mounted with their axes of rotation 61 oriented substantially orthogonally to the longitudinal axis of the shaft 56 and to the plane of the upper wall 35 of said table-top 26. The axes 61 of the pulleys 60 are spaced apart in the longitudinal direction of said shaft 56. The function of the pulleys 60 is described in more detail below.

Said shaft 56 comprises a first end 65 and an opposite second end 66. Intermediate said ends 65, 66, at an approximate centre-point 67, the shaft is formed with a slight depression 68 which serves to locate the sliding nut 55 at said centre point 67 as described below.

Said nut 55 comprises a generally tubular body portion 70 which is formed towards its middle with a circumferentially extending slot 71. The body portion 70 carries a rocker assembly 72 which is pivotably mounted on a pin 73 that extends from one side of the slot 71 to the other in a direction substantially parallel to the shaft 56. Said rocker assembly 72 is biased towards the shaft 56 by two torsion springs (one shown at 74) which extend around the pin 73 and act against the rocker assembly 72. Said rocker assembly 72 comprises a base portion 75 which carries a small roller 76. Said small roller 76 is mounted on the base portion 75 by means of a short shaft 77 about which the roller 76 can rotate, and is arranged to engage and roll along the shaft 56 of the ball-spline 54. The roller 76 is positioned to enter into the depression 68 formed in the shaft 56 when the slidable nut 55 is positioned at the centre point 67. At the centre point 67, the small roller 76 enters the depression automatically under the influence of the torsion springs 74.

Adjacent the small roller 76, the base portion 75 carries a forked finger portion 78 which carries an oscillating blade element 79 between the forks 80. Said oscillating blade element 79 is mounted on a pin 81 that extends between the forks 80 and is biased outwardly of the shaft 56 by means of a torsion spring 82 which is mounted on the pin 81 and acts against the blade element 79. Said blade element 79 comprises an outwardly protruding nose portion 83 which, when the slidable nut 55 is positioned at any point along the shaft 56 other than the centre point 67, normally protrudes outwardly of the body portion 70 of the nut 55. When the nut 55 is positioned at the centre point 67, and the small roller 76 enters the depression 68, the finger portion 78, being rigidly mounted on the base portion 75 moves radially inwardly with respect to the shaft 56, and accordingly the nose portion 83 of the blade element 79 is also moved radially inwardly with respect of the shaft.

Juxtaposed the sub-frame 44, the body portion 70 of the slidable nut 55 is formed with a longitudinal open bore 85.

Proximate each the first and second ends 65, 66 of the shaft 56, the shaft 56 carries a clamp member 88, 89, which clamp member is tightly clamped or keyed to its respective end 65, 66 of the shaft 56 for rotation therewith. Each clamp member 88, 89 tightly holds one end of a respective length of cable 90 such, for example, as Bowden cable, which cable extends along the shaft 56 towards the centre point 67, into a respective end of the end open bore 85 formed in the body portion 70 of the sliding nut 55, out through an orifice (not shown) in the side of the body portion 70, and around a respective one of the pulleys 60, which reverses the direction of the cable 90 such that the cable 90 then extends back towards its respective end 65, 66 of the shaft 56 juxtaposed the inner edge 30 of the table-top 26; the other end of the cable 90 being secured to the table-top 26 juxtaposed a respective one of the side edges 32, 33.

The pulleys 60 and the cables 90 thus serve as a "block and tackle" type mechanism in which movement of the slidable nut 55 along the shaft 56 causes corresponding movement of the table-top 26 relative to the sub-frame 44 by sliding of the guide rails 40, 41 in the bearings 50, 51 provided in the sub-frame 44. The block and tackle arrangement has a ratio of 2:1, such that for distance *d* moved by the sliding nut 55 along the shaft 56, the table-top 26 moves distance *d*/*2* with respect to the sub-frame 44, in the same direction. Furthermore, the block and tackle arrangement of the pulleys 60 and cables 90 ensures that the respective sliding movements of the slidable nut 55 on the shaft 56 and the table-top 56 on the sub-frame 44 are coincident at their extremities. Thus, when the slidable nut 55 is disposed at the extremity of its travel proximate one end 65, 66 of the shaft 56, the table-top 26 is also positioned at the extremity of its movement on the sub-frame in the same direction; and when the slidable nut 55 is disposed at the other extremity of its movement juxtaposed the other end 66, 65 of the shaft 56, the table-top 26 is disposed at the opposite extremity of its respective travel on the sub-frame 44. Movement of the nut 55 along the shaft 56 thus causes reciprocal lateral movement of the table-top 26 relative to the shaft 56 as shown in FIGS. 2A and 2B.

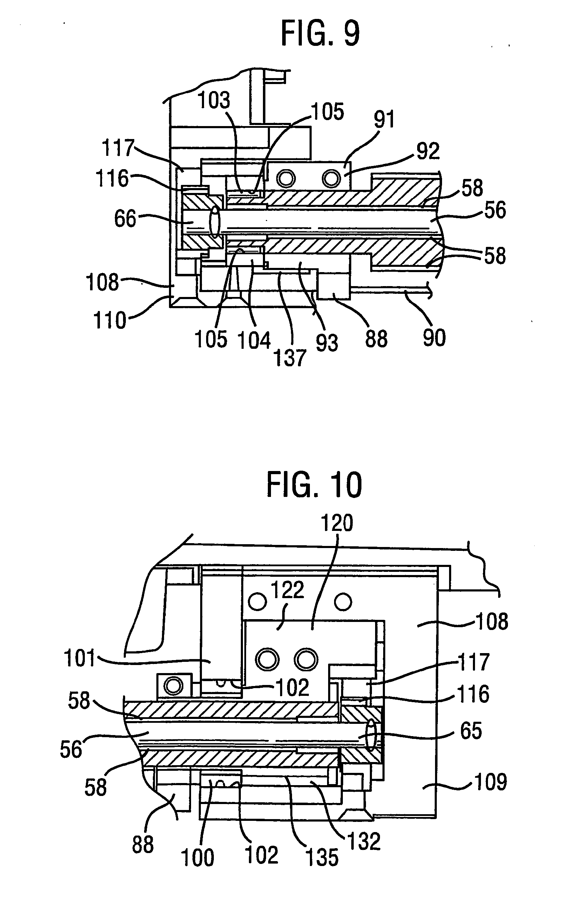

Proximate the first end 65 of the shaft 56, outwardly of the respective clamp member 88, the shaft 65 carries a roller 100. Said roller 100 is arranged to engage an elongate, substantially linear track 101 which comprises two opposing faces 102 (see FIG. 10) which engage the roller 100 with a small tolerance.

Proximate the second end 66 of the shaft 56, the shaft 56 carries a second roller 103 outwardly of the respective clamp 89, which second roller 103 is received in a second elongate substantially linear track 104, which second track 104 is disposed substantially parallel to the first track 101, and comprises two opposing faces 105 which engage the second roller 103 with a small tolerance.

The rollers 100, 103 are constrained to move within their respective tracks 101, 104, and permit rotation of the shaft 56 about its own longitudinal axis.

Said first and second tracks 101, 104 are attached to a mounting frame 108 which is adapted for fixedly mounting the table assembly 25 within the recess 17 in the side wall 12, such that the first and second tracks 101, 104 are oriented substantially vertically, and the ball spline 54 extends substantially horizontally therebetween. Said mounting frame 108 comprises two opposing, upright side parts 109, 110 which house the first and second tracks 101, 104 respectively, an upper bridging part 111 which interconnects the side parts 109, 110 at their upper ends, and a lower plate-like part which also interconnects the two side parts 109, 110. In the fitted position, the tracks 101,104 extend substantially vertically between upper and lower ends 106, 107 respectively.

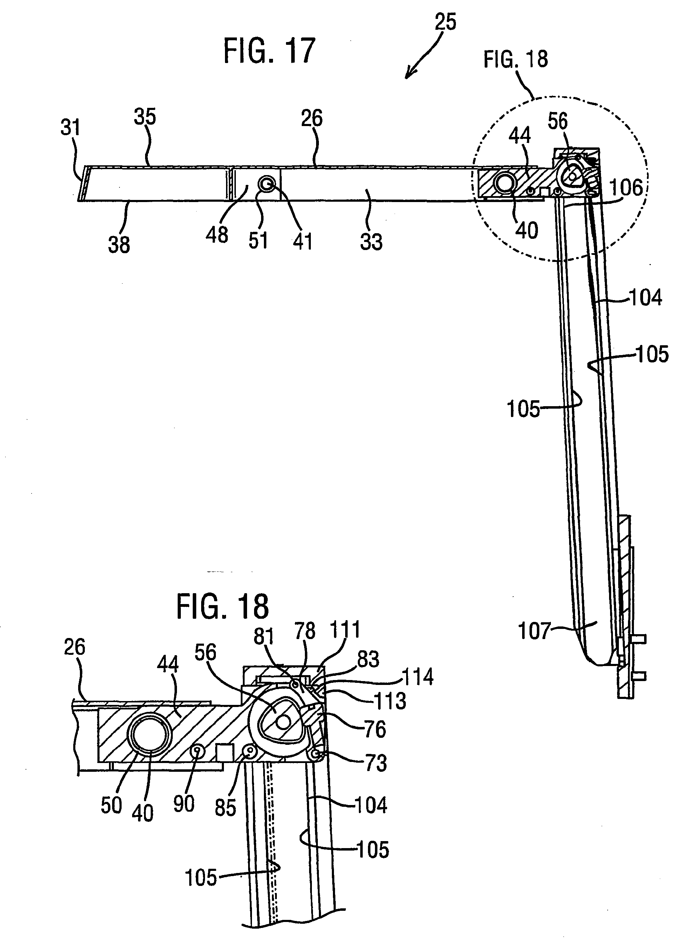

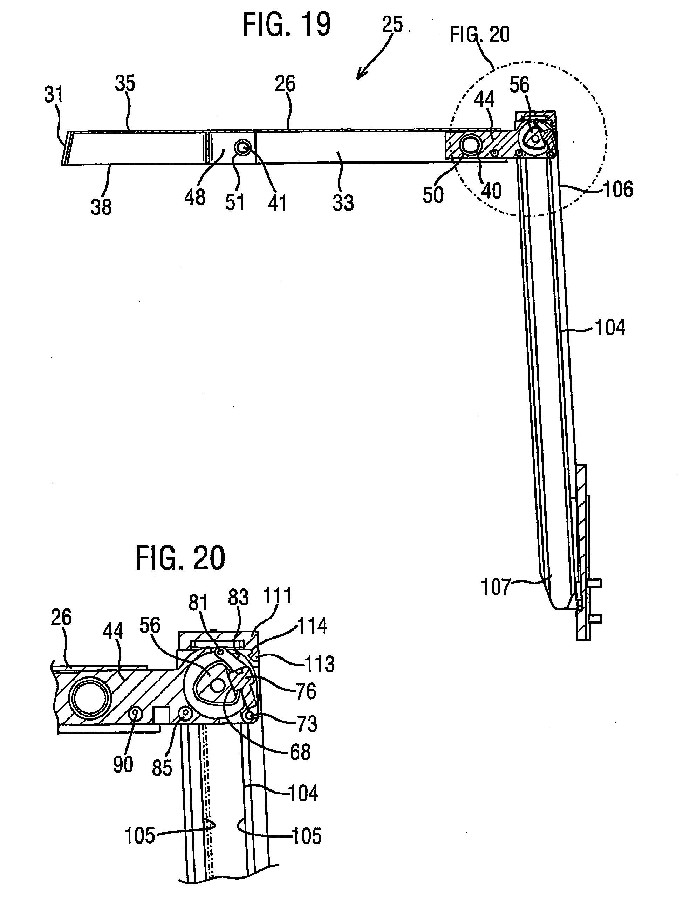

As best seen in FIGS. 18 and 20, the upper bridging part 111 comprises a channel section with a depending rear wall 113 which is formed with an elongate groove 114 serving as a catch for the nose portion 83 of the blade element 79 on the rocker assembly 72 of the slidable nut 55. Said upper bridging part 111 is configured and positioned such that, other than when the sliding nut 55 is disposed at the centre point 67, the nose portion 83 of the rocker assembly 72 engages in the groove 114 to prevent rotation of the shaft 56 about its longitudinal axis.

At each end 65, 66, the shaft 56 comprises a coaxially-mounted, freely-rotatable pinion 116 which is arranged to engage a respective, corresponding linear rack 117 which is rigidly mounted on the mounting frame 108, said rack 117 being arranged substantially parallel to and juxtaposed the respective first or second track 101, 104, and extending fully between the upper and lower ends 106, 107.

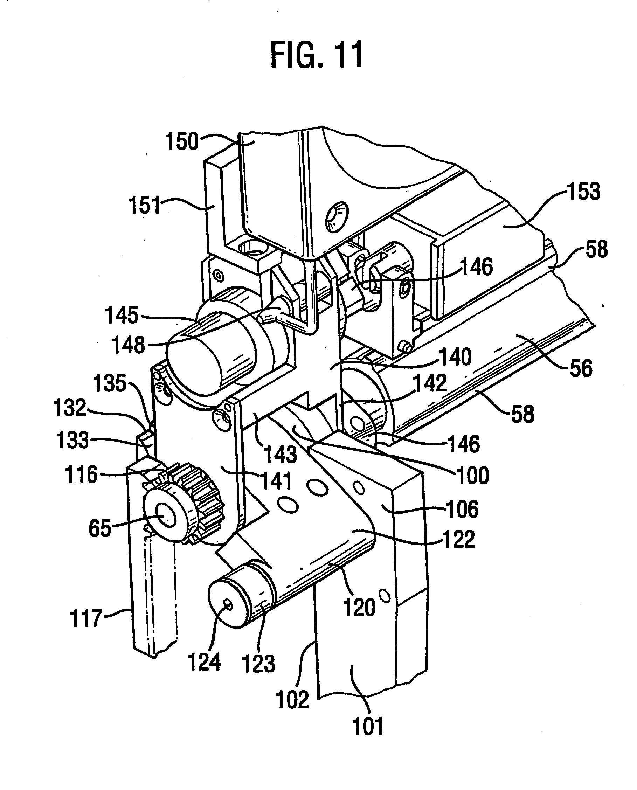

Proximate the first end 65 of the shaft 56, the shaft carries a cam follower assembly 120 as best seen in FIG. 11. Said cam follower assembly 120 comprises a L-shaped block 121 which is keyed onto the end 65 of the shaft 56 of rotation therewith. Said block 121 protrudes on both sides of the shaft in generally opposite directions, having a relatively small, forwardly protruding "beak" portion 135, and relatively large, rearwardly protruding body portion having a substantially flat upper surface 122, and carrying a cam follower wheel 123 which is mounted for rotation on a shaft 124 defining an axis of rotation that is substantially parallel to the shaft 56, but radially offset therefrom.

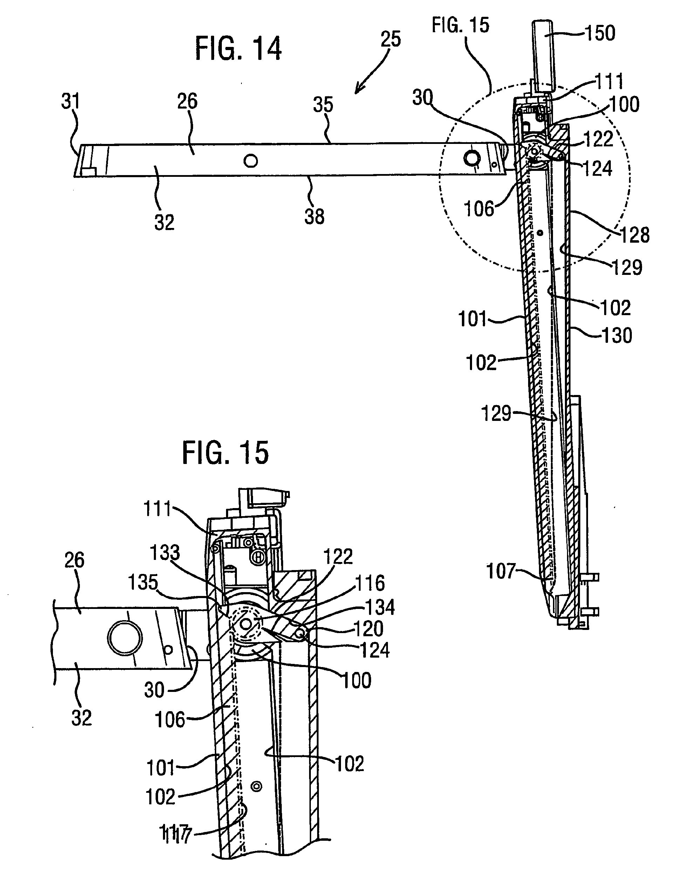

Said cam follower wheel 123 engages a shaped cam track 128 which comprises two opposing faces 129 (one face shown in dashed lines in FIGS. 14 and 15) that extends juxtaposed the first track 101 at the first end 65 of the shaft 56. Said opposing faces 129 engage the cam follower wheel 123 with a small tolerance. As best seen in FIG. 14, towards the lower end 107 of the first track 101, the cam track 128 extends substantially parallel to the first track 101. However, an upper section 130 of the cam track 128 is inclined rearwardly with respect to the first track 101 for the reasons described in more detail below. At the lower end 107 of the first track, the cam track 128 is also inclined relative to the first track over a short distance.

Juxtaposed the first end 65 of the shaft 56, intermediate the first track 101 and the adjacent rack 117, at the upper end 106 of the track 101, the side part 109 of the mounting frame 108 carries an abutment plate 132 having a shaped, inwardly directed engaging surface 133. Said abutment plate 132 is aligned with the forwardly protruding "beak" portion 135 of the L-shaped block 121. Said beak portion 135 is arranged to engage the engaging surface 133 of the abutment plate 132 when the shaft 56 is disposed at the upper end 106 of the tracks 101, 104, and when the shaft 56 is rotated about its axis such that the table-top 26 extends forwardly, substantially horizontally from the shaft 56. Rearwardly of the shaft 56, the side part 109 of the mounting frame 108 is formed with a shelving abutment surface 134 which is arranged to engage the upper surface 122 of the body portion of the L-shaped block 121, when the beak portion 135 engages the engaging surface 133 of the abutment plate 132 as described above.

The L-shape block 121 thus engages the mounting frame 108 at two spaced locations on opposite sides of the shaft 56 when the table-top is horizontal.

At the second end 66 of the shaft 56, the clamp member 89 protrudes to each side of the shaft 56 in generally opposite directions as shown in FIG. 9 to provide a rear section 91 having a substantially flat upper surface 92, and a forwardly protruding "beak" portion 93. Inwardly of the second track 104, the side part 110 of the mounting frame 108 comprises an abutment plate 137 which is arranged to engage the beak portion 93 of the clamp member 89 when the table-top is horizontal, and the side part 110 is formed with a shelving abutment surface (not shown), similar to abutment surface 134, which is arranged to engage the upper surface 92 of the rearwardly protruding section 91. Thus when the table-top 26 is oriented substantially horizontally as described above, the second end 66 the shaft 56 also engages the mounting frame 108 at two spaced locations to either side of the shaft 56.

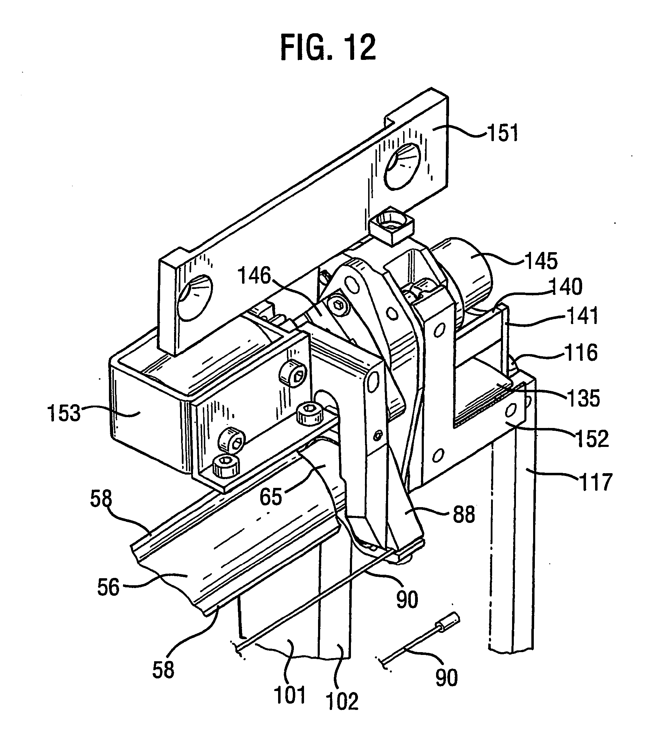

With reference to FIGS. 11 and 12, the first end 65 of the shaft 56 further carries a cradle assembly 140 comprising two axially spaced side plates 141, 142, and an upper bridging piece 143. The first end 65 of the shaft 56 extends through the two side plates 141, 142, such that the shaft 56 can freely rotate relative to the side plates 141, 142, and the bridging piece 143 carries a rotary damper mechanism 145 which is linked to the shaft 56 for damping rotation thereof through a plurality of links 146. The use of rotary damping systems is well known in the art, and is not described in further detail herein.

Said cradle assembly 140 further provides an anchorage point 148 for an end of a constant force spring device 150 which is fixedly mounted on a plate 151 secured to the mounting frame 108.

The mounting frame 108 also supports a solenoid latching device 153 for latching the table-top 26 in the stowed position as shown in FIG. 1A and described in more detail below. Solenoid latching devices 153 are well known in the art, and accordingly further details of the solenoid latching device 153 are not provided herein.

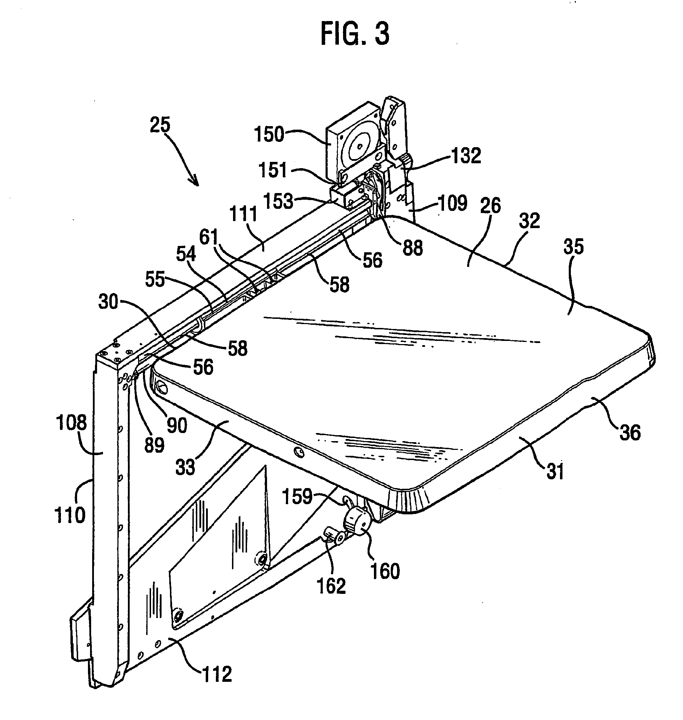

As best shown in FIG. 3, the lower part 112 of the mounting frame 108 is formed with an arcuate slot 159 which receives a short stud (not shown) protruding from a small cylindrical pusher member 160 which is thus constrained to slide along the slot 159. Said pusher member 160 may be formed from natural or synthetic rubber, or from any other non-hard material. A torsion spring 161 mounted on a pin 162 urges the pusher member 160 upwards within the slot 159.

Said tracks 101, 104 thus serve to guide translational movement of the shaft 56 of said ball spline 54 in a generally vertical direction between a lower position juxtaposed the lower ends 107 of the tracks 101, 104 and an upper position juxtaposed the upper ends 1006 of the tracks 101, 104. The rollers 100, 103 at the first and second ends 65, 66 of the shaft 56 respectively are constrained to move in the tracks 101, 104, and thus serve to locate the shaft 56 stably. As the rollers 100, 103 move up and down the respective tracks 101, 104, the pinions 116 at the opposite ends of the shaft 56 engage their respective racks 117 to ensure that the two ends 65, 66 of the shaft 56 move together, and thereby avoid "crabbing". As a result, the shaft 56 moves smoothly between the upper and lower and positions.

The cam mechanism comprising the cam follower assembly 120 and cam track 128 serves to control rotation of the shaft 56 about its longitudinal axis. With reference to FIG. 14, when the shaft 56 is disposed in the lower position, the cam follower wheel 123 is constrained by the cam track 128 to be disposed generally beneath the shaft 56, such that the sub-frame 44 mounted to the ball spline 54, and thus the table-top 26, are disposed in a substantially upright orientation as shown in FIG. 1A. As the shaft 56 moves upwardly from the lower position towards the upper position, the configuration of the cam track 128 causes the cam follower wheel 123 to rotate about the shaft 56, and because the L-shaped block 121 is fixedly keyed onto the shaft 56, rotation of the block 121 causes corresponding rotation of the shaft 56 itself, resulting in rotation of the table-top 26 from the upright position, through an intermediate position as shown in FIG. 1B to a deployed position as shown in FIG. 1C, in which the table-top 26 projects forwardly of the shaft 56, with the upper and lower walls 35, 38 being disposed substantially horizontally.

In the upper position as shown in FIGS. 14 and 15, the table-top 26 is disposed substantially horizontally as mentioned above, and the beak portion 135 and upper surface 122 of the L-shape block 121 project respectively forwardly and rearwardly of the shaft 56 in generally opposite directions to engage respectively the engaging surface 133 of the abutment plate 132, and the shelving abutment surface 134 defined by the side part 109 of the mounting frame 108 juxtaposed the upper end 106 of the track 101. At the second end 66 of the shaft 56, the upper surface 92 of the rear section 91 of the clamp member 89, and the beak portion 93 of the clamp member 89 engage respectively on the shelving abutment surface defined by the side part 110 of the mounting frame 108 and the abutment plate 137.

Thus at each end 65, 66 of the shaft 56, the mounting frame 108 reacts against the L-shaped block 121 and cam member 89 respectively at two spaced locations on either side of the shaft 56, thereby to cantilever the table-top 26 from the shaft 56. The engagement of the rollers 100, 103 in the respective tracks 101, 104 serves to locate the shaft 56 stably in the upper position at the upper ends 106 of the tracks 101, 104, such that the beak portions 93, 135, and the upper surfaces 92, 122 stably engage the abutment plates 132, 137 and engaging surfaces 134 respectively, whereby the table-top 26 is capable of bearing substantial loads.

The weight of the table-top 26 and ball spline 54 is counter-balanced by the constant force spring device 150 to prevent the table-top 26 from dropping towards the lower position under its own weight.

In the upper position, with the table-top 26 deployed substantially horizontally, the table-top 26 is capable of lateral or reciprocating movement as described above by movement of the slidable nut 55 on the shaft 56, in spite of the torque transmitted through the ball spline 54.

When the table-top 26 is positioned laterally away from the centre point 67, the small roller 76 carried by the rocker assembly 72 on the nut 55 rides along the surface of the shaft 56, such that the nose portion 83 of the blade element 79 is urged outwardly by said torsion spring 82 into engagement with the elongate groove 114 formed in the upper bridging part 111 of the mounting frame 108, as shown in FIG. 18. Such engagement of the blade element 79 in the groove 114 serves to prevent rotation of the shaft 56 about its axis, and thus serves to prevent the table-top 26 from being returned to its lower stowed position.

However when the slidable nut 55 is positioned at the centre point 67 as shown in FIGS. 19 and 20, the small roller 76 enters into the depression 68 formed in the shaft 56, thus disengaging the blade element 79 from the groove 114 formed in said upper bridging part 111 of the mounting frame 108. With the blade element 79 released, the shaft 56 is able to rotate about its axis, disengaging the beak portions 93, 135 and upper surfaces 92, 122 from the respective abutment plates 132, 137 and engaging surfaces 134, such that the shaft 56 may be moved downwardly in the tracks 101, 104 to restore it to the lower position. As the shaft 56 is moved downwardly, the interaction of the cam track 128 and cam follower assembly 120 controls rotation of the shaft 56 in the manner described above, but in reverse, to cause the table-top 26 to rotate from its substantially horizontal deployed position to its upright position as shown in FIG. 1A, in which the table-top 26 occupies the opening 16 formed in the side wall 12, and the bottom wall 38 of the table-top 26 is disposed flush with the surface of the surrounding panel 14.

In the lower stowed position, the inner edge 30 of the table-top 26 engages the pusher member 160, urging it to move downwardly in said arcuate slot 159 against the force of the torsion spring 161. The solenoid latching device 153 operates automatically to latch the table-top 26 in the lower position.

When it is desired to re-deploy the table-top 26, the solenoid latching device 153 is operated to release the table-top, and the restoring force of the torsion spring 161 acting on the pusher member 160 urges the pusher member 160 to move upwardly in the slot 159, pushing the table-top 26 upwards by a short distance along the tracks 101, 104. As mentioned above, the cam track 128 is toed-in at the lower ends 107 of the tracks 101, 104, such that the initial movement of the table-top 26 produced by the pusher member 160 causes the shaft 56 to rotate slightly to angle the table-top 26 forwardly away from the side-wall 12. This enables a passenger to grab hold of the outer edge 31 of the table-top 26 in order to pull the table-top 26 manually upwards, thereby to deploy the table-top fully.

The stowable table assembly 25 in accordance with the present invention is thus able to provide a substantially-sized, stably mounted table-top 26 which can be stowed in a -substantially upright orientation as shown in FIG. 1A and deployed to a substantially horizontal orientation as shown in FIG. 1C. The engagement of the rollers 100, 103 in the tracks 101, 104, and the interengagement of the pinions 116 with their respective racks 17 provides a smooth, stable movement of the table-top 26 from the lower position to the upper position. The interengagement of the cam track 128 and the cam follower assembly 120 controls rotation of the shaft 56 about its axis as the table-top 26 moves from the lower position to the upper position, such that in the lower position the table-top 26 is constrained in the upright stowed orientation, and in the upper position it is caused to be deployed in the substantially horizontal orientation. The rollers 100, 103 serve to locate the shaft 56 accurately at the upper ends 106 of the tracks 100, 104, enabling stable, load-bearing engagement of the beak portions 93, 135 and engaging surfaces 92, 122 with the respective abutment plates 132, 137 and abutment surfaces 134 in order to cantilever the table-top 26 from the mounting frame 108. In spite of the torque transmitted through the shaft 56, the ball spline 54 allows the table-top 26 to reciprocate easily in a lateral direction as shown in FIGS. 2A and 2B when in the deployed position and orientation, so as to enable the table top 26 to be moved to any convenient position as desired by a passenger.

In the stowed position, the table assembly 25 advantageously occupies a very small footprint area, enabling it to be fitted in relatively narrow side walls 12 of the kind forming parts of housings for aircraft seat units.

## Claims

1. A stowable table (25) for a vehicle, particularly an aircraft, said stowable table comprising:
mounting means (108) adapted to be fixedly secured to a supporting structure (12);
table-top means comprising a table-top member (26);
connecting means for connecting said table-top means to said mounting means, said connecting means comprising guiding means (101, 104) which are adapted to allow the table-top means to slide substantially vertically with respect to the mounting means when fitted between a first lower stowed position and a second upper deployed position, and to allow said table-top means to rotate about a substantially horizontal axis (56) between a stowed upright orientation when in the first stowed position, and a substantially horizontal deployed orientation when in the deployed position;
cantilevering means (121, 89) for cantilevering the table-top means from the mounting means in the upper deployed position such that the table-top means are capable of bearing loads in said deployed orientation, said cantilevering means comprising engaging means (121, 91) on said table-top means, and abutment means (132, 137) on said mounting means; said engaging means and abutment means being configured and arranged to engage one another when the table-top means are rotated to the deployed orientation in the deployed position; and said guiding means being further adapted to locate the table-top means in said upper position, such that said engaging means and abutment means engage one another stably when the table-top means are rotated to the deployed orientation,
**characterised in that** said table-top means comprise means for connecting said table-top member to said guiding means and providing lateral reciprocal movement of said table-top member relative to said mounting means when said table-top means are disposed in said deployed position and orientation, said table-top connecting means is arranged to allow said table-top member to slide in a direction substantially parallel to said axis, and wherein said table-top connecting means further comprise a sub-frame (44), and means for slidably mounting said table-top member on said sub-frame so as to allow said table-top member to slide reciprocally relative to said sub-frame in a direction substantially parallel to said axis; said slidable mounting means comprising a plurality of spaced, substantially parallel guide rails (40, 41) on one of said table-top member (26) and said sub-frame (44), and linear bearings (50, 51) on the other of said sub-frame and said table-top member for bearing said guide rails.

2. A stowable table (25) as claimed in claim 1, wherein said engaging means (121, 91) comprise a plurality of formations (135, 93) on said table-top means (26) and adapted to rotate therewith.

3. A stowable table (25) as claimed in claim 2, wherein said abutment means comprise a plurality of corresponding abutment plates (132, 137).

4. A stowable table (25) as claimed in claim 2 or claim 3, wherein said table-top member (26) and said formations (135, 93) are arranged such that when said table-top assembly is in the deployed orientation, said table-top member projects in a forwards direction from said horizontal axis (56), and said formations project generally forwardly from said axis and in a generally opposite, rearwards direction from said axis; said corresponding abutment means (132, 137) being disposed generally in front of and behind said axis, such that in the deployed position and orientation, said mounting means (108) react on the table-top means through said abutment means at spaced positions on either side of said axis for cantilevering the table-top means.

5. A stowable table (25) as claimed in claim 4, wherein said table-top means (26) comprise a rotatable shaft (56), said table-top member being connected to said shaft, and said shaft being disposed on said substantially horizontal axis; said formations (135, 93) being fixedly mounted on said shaft.

6. A stowable table (25) as claimed in any preceding claim, wherein said guiding means (101, 104) comprise track means (101, 104) on said mounting means (108), and corresponding track-following means (100, 103) on said table-top means (26), which track-following means are constrained to slide along said track means for guiding the table-top means between said stowed and deployed positions.

7. A stowable table (25) as claimed in claim 6, wherein said track means (101, 104) comprise two spaced, upright tracks (101, 104), and said track-following means (100, 103) comprise two corresponding rollers (100, 103) on said table-top means (26).

8. A stowable table (25) as claimed in claim 6 or claim 7, wherein said track-following means (100, 103) are positioned on said horizontal axis (56).

9. A stowable table (25) as claimed in claim 6 or claim 7, or claim 8, wherein said guide means (101, 104) further comprise means (120, 128) for controlling rotation of said table-top means (26), according to the position of said table-top means between the lower stowed position and the upper deployed position.

10. A stowable table (25) as claimed in claim 9, wherein said rotation controlling means (120, 128) comprise shaped cam means (128) on said mounting means (108) and corresponding cam-following means (123) on said table-top means (26); wherein said cam means and said cam-following means are configured and positioned relative to the track means (101, 104) and track-following means (100, 103) to position the table-top means in the stowed orientation when in the stowed position, and in the deployed orientation when in the deployed position.

11. A stowable table (25) as claimed in claim 10, wherein said cam means (128) are configured to cause progressively greater rotation of the table-top means (26) about said horizontal axis (56) from the stowed orientation to the deployed orientation as the table-top means moves from said lower stowed position to said upper deployed position.

12. A stowable table (25) as claimed in claim 11, wherein said track following means (100, 103) are positioned on said horizontal axis (56), and said cam-following means (123) are offset from said axis; said track means (101, 104) and cam means (128) extend generally upwardly from respective lower ends to respective upper ends when fitted to said supporting structure (12), and said cam means diverge from the track means as they extend from their lower end to their upper end to cause progressively greater rotation of the cam-following means (123) about said axis such as to cause said table-top (26) to rotate from said stowed orientation to said deployed orientation as it moves from said stowed position to said deployed position.

13. A stowable table (25) as claimed in any preceding claim, wherein said connecting means further comprise means (150) for counter-balancing the weight of the table-top means (26) as they move between said stowed and deployed positions.

14. A stowable table (25) as claimed in claim 13, wherein said counter-balancing means (150) comprise a constant force spring connected between the table-top means (26) and the mounting means (108).

15. A stowable table (25) as claimed in any preceding claim, wherein said guiding means (101, 104) further comprise two spaced racks (117) on said mounting means (108), which racks extend substantially vertically when fitted to said supporting structure (112), and two corresponding, free-rotatable pinions (116) mounted on said table-top means (26) on said horizontal axis (56) in engagement with said racks, thereby to obtain smooth movement of the table-top means between said upper and lower positions.

16. A stowable table (25) as claimed in any preceding claim, wherein said slidable mounting means comprises two guide rails (40, 41), one guide rail (40) being supported by two spaced bearings (50) on said sub-frame (44) or table-top member (26), and the other guide rail (41) being supported by only one bearing (51), thereby to alleviate juddering when the table-top member slides relative to said sub-frame.

17. A stowable table (25) as claimed in any preceding claim, in which the table top connecting means comprises a ball spline (54) connected to said guiding means (101, 104), the sub-frame (44) being connected to the ball spline.

18. A stowable table (25) as claimed in claim 17, wherein said table-top connecting means further comprise two pulleys (60), each of which is mounted to the table-top member (26) for rotation about a pulley axis (61) substantially orthogonal to the direction of sliding of said table-top member; and two cables (90), each of which is connected at one end to a respective end of the ball spline (54), extends around a respective one of said pulleys, and is connected at its other end to the table-top member, the arrangement being such that movement of the sub-frame (44) on the ball spline causes corresponding movement of the table-top member in the same direction relative to the sub-frame.

19. A stowable table (25) as claimed in claim 17 or 18, wherein said ball spline (54) comprises a shaft (56) and reciprocating nut (55) adapted to travel along said shaft; said shaft being formed with a locating depression (68) at a centre-point (67), and said nut comprising a spring-loaded follower (76) that is adapted to enter said depression when the nut is positioned at said centre-point; said follower comprising an engaging member (83) that is arranged normally to engage a corresponding abutment (114) provided on said mounting means (108) so as to prevent rotation of the table-top means (26) from the deployed orientation to the stowed orientation, except when said nut is positioned at the centre-point where entry of the follower into the depression cause said engaging member to disengage from the abutment, thereby to allow said table-top means to be returned to the stowed orientation at the centre-point.

## Patentansprüche

1. Verstaubarer Tisch (25) für ein Fahrzeug, insbesondere ein Flugzeug, wobei der verstaubare Tisch Folgendes aufweist:
Montagemittel (108), die fest an einer Stützstruktur (12) befestigt werden können,
Tischplattenmittel mit einem Tischplattenelement (26),
Verbindungsmittel zum Verbinden der Tischplattenmittel mit den Montagemitteln, wobei die Verbindungsmittel Führungsmittel (101, 104) aufweisen, die es den Tischplattenmitteln gestatten können, im Wesentlichen vertikal bezüglich der Montagemittel zu gleiten, wenn sie zwischen einer ersten unteren verstauten Position und einer zweiten oberen ausgeklappten Position angebracht sind, sowie den Tischplattenmitteln gestatten können, sich um eine im Wesentlichen horizontale Achse (56) zwischen einer verstauten aufrechten Ausrichtung, wenn sie sich in der ersten verstauten Position befinden, und einer im Wesentlichen horizontalen ausgeklappten Ausrichtung, wenn sie sich in der ausgeklappten Position befinden, zu drehen,
Freitragemittel (121, 89) zum freien Tragen des Tischplattenmittels von den Montagemitteln in der oberen ausgeklappten Position, so dass die Tischplattenmittel in der Lage sind, in der ausgeklappten Ausrichtung Lasten zu tragen, wobei die Freitragemittel Eingriffsmittel (121, 91) auf den Tischplattenmitteln und Anschlagmittel (132, 137) an den Montagemitteln aufweisen, wobei die Eingriffsmittel und die Anschlagmittel so konfiguriert und angeordnet sind, dass sie einander in Eingriff nehmen, wenn die Tischplattenmittel zur ausgeklappten Ausrichtung in der ausgeklappten Position gedreht werden, und wobei die Führungsmittel ferner die Tischplattenmittel in der oberen Position anordnen können, so dass die Eingriffsmittel und die Anschlagmittel einander stabil in Eingriff nehmen, wenn die Tischplattenmittel zur ausgeklappten Ausrichtung gedreht werden,
**dadurch gekennzeichnet, dass** die Tischplattenmittel Mittel aufweisen, um das Tischplattenelement mit den Führungsmitteln zu verbinden und für seitliche Pendelbewegung des Tischplattenelements bezüglich der Montagemittel zu sorgen, wenn die Tischplattenmittel in der ausgeklappten Position und Orientierung angeordnet sind, wobei die Tischplattenverbindungsmittel so angeordnet sind, dass sie dem Tischplattenelement gestatten, in einer im Wesentlichen parallel zur Achse verlaufenden Richtung zu gleiten, und wobei die Tischplattenverbindungsmittel ferner ein Untergestell (44) und Mittel aufweisen, um das Tischplattenelement gleitend auf dem Untergestell zu montieren, so dass das Tischplattenelement pendelnd bezüglich des Untergestells in einer im Wesentlichen parallel zur Achse verlaufenden Richtung gleiten kann, wobei die gleitenden Montagemittel mehrere beabstandete, im Wesentlichen parallele Führungsschienen (40, 41) an dem Tischplattenelement (26) und dem Untergestell (44) einerseits und lineare Lager (50, 51) an dem Untergestell oder dem Tischplattenelement andererseit zum Tragen der Führungsschienen aufweisen.

2. Verstaubarer Tisch (25) nach Anspruch 1, wobei die Eingriffsmittel (121, 91) mehrere Gebilde (135, 93) auf den Tischplattenmitteln (26) aufweisen, die sich damit drehen können.

3. Verstaubarer Tisch (25) nach Anspruch 2, wobei die Anschlagmittel mehrere entsprechende Anschlagplatten (132, 137) aufweisen.

4. Verstaubarer Tisch (25) nach Anspruch 2 oder 3, wobei das Tischplattenelement (26) und die Gebilde (135, 93) so angeordnet sind, dass das Tischplattenelement von der horizontalen Achse (56) nach vorne vorsteht und die Gebilde von der Achse allgemein nach vorne und allgemein gegenüberliegend nach hinten vorstehen, wenn die Tischplattenanordnung in der ausgeklappten Ausrichtung ist, wobei die entsprechenden Anschlagmittel (132, 137) so allgemein vor und hinter der Achse angeordnet sind, dass die Montagemittel (108) in der ausgeklappten Position und Ausrichtung durch die Anschlagmittel an beabstandeten Positionen auf beiden Seiten der Achse auf die Tischplattenmittel wirken, um die Tischplattenmittel frei zu tragen.

5. Verstaubarer Tisch (25) nach Anspruch 4, wobei die Tischplattenmittel (26) eine drehbare Welle (56) aufweisen, wobei das Tischplattenelement mit der Welle verbunden ist und die Welle an der im Wesentlichen horizontalen Achse angeordnet ist, wobei die Gebilde (135, 93) fest an der Welle montiert sind.

6. Verstaubarer Tisch (25) nach einem der vorhergehenden Ansprüche, wobei die Führungsmittel (101, 104) Spurmittel (101, 104) an den Montagemitteln (108) und entsprechende Spurfolgemittel (100, 103) an den Tischplattenmitteln (26) aufweisen, wobei die Spurfolgemittel entlang den Spurmitteln gleiten müssen, um die Tischplattenmittel zwischen der verstauten und der ausgeklappten Position zu führen.

7. Verstaubarer Tisch (25) nach Anspruch 6, wobei die Spurmittel (101, 104) zwei beabstandete aufrechte Spuren (101, 104) aufweisen und die Spurfolgemittel (100, 103) zwei entsprechende Rollen (100, 103) an den Tischplattenmitteln (26) aufweisen.

8. Verstaubarer Tisch (25) nach Anspruch 6 oder 7, wobei die Spurfolgemittel (100, 103) an der horizontalen Achse (56) positioniert sind.

9. Verstaubarer Tisch (25) nach Anspruch 6 oder 7 oder 8, wobei die Führungsmittel (101, 104) ferner Mittel (120, 128) zum Steuern des Drehens der Tischplattenmittel (26) je nach der Position der Tischplattenmittel zwischen der unteren verstauten Position und der oberen ausgeklappten Position aufweisen.

10. Verstaubarer Tisch (25) nach Anspruch 9, wobei die Drehungssteuermittel (120, 128) geformte Nockenmittel (128) an den Montagemitteln (108) und entsprechende Nockenfolgermittel (123) an den Tischplattenmitteln (26) aufweisen, wobei die Nockenmittel und die Nockenfolgermittel so bezüglich der Spurmittel (101, 104) und der Spurfolgemittel (100, 103) konfiguriert und positioniert sind, um die Tischplattenmittel in der verstauten Ausrichtung zu positionieren, wenn sie sich in der verstauten Position befinden, und in der ausgeklappten Ausrichtung, wenn sie sich in der ausgeklappten Position befinden.

11. Verstaubarer Tisch (25) nach Anspruch 10, wobei die Nockenmittel (128) so konfiguriert sind, dass sie eine allmählich stärker werdende Drehung der Tischplattenmittel (26) um die horizontale Achse (56) aus der verstauten Ausrichtung zur ausgeklappten Ausrichtung bewirken, wenn sich die Tischplattenmittel aus der unteren verstauten Position in die obere ausgeklappte Position bewegen.

12. Verstaubarer Tisch (25) nach Anspruch 11, wobei die Spurfolgemittel (100, 103) an der horizontalen Achse (56) positioniert sind und die Nockenfolgermittel (123) von der Achse versetzt sind, wobei sich die Spurmittel (101, 104) und die Nockenmittel (128) von jeweiligen unteren Enden allgemein nach oben zu jeweiligen oberen Enden erstrecken, wenn sie an der Stützstruktur (12) angebracht sind, und die Nockenmittel von den Spurmitteln divergieren, wenn sie sich von ihrem unteren Ende zu ihrem oberen Ende erstrecken, um eine allmählich stärker werdende Drehung der Nockenfolgermittel (123) um die Achse zu bewirken, damit sich die Tischplatte (26) aus der verstauten Ausrichtung in die ausgeklappte Ausrichtung dreht, wenn sie sich aus der verstauten Position in die ausgeklappte Position bewegt.

13. Verstaubarer Tisch (25) nach einem der vorhergehenden Ansprüche, wobei die Verbindungsmittel ferner Mittel (150) zum Ausgleichen des Gewichts der Tischplattenmittel (26), während sich diese zwischen der verstauten und der ausgeklappten Position bewegen, aufweisen.

14. Verstaubarer Tisch (25) nach Anspruch 13, wobei die Ausgleichmittel (150) eine Feder mit konstanter Kraft aufweisen, die zwischen den Tischplattenmitteln (26) und den Montagemitteln (108) verbunden ist.

15. Verstaubarer Tisch (25) nach einem der vorhergehenden Ansprüche, wobei die Führungsmittel (101, 104) ferner zwei beabstandete Zahnstangen (117) an den Montagemitteln (108) aufweisen, wobei sich die Zahnstangen im Wesentlichen vertikal erstrecken, wenn sie an der Stützstruktur (112) angebracht sind, sowie zwei entsprechende frei drehbare Zahnräder (116), die an den Tischplattenmitteln (26) an der horizontalen Achse (56) im Eingriff mit den Zahnstangen montiert sind, um **dadurch** eine reibungslose Bewegung der Tischplattenmittel zwischen der oberen und der unteren Position zu erhalten.

16. Verstaubarer Tisch (25) nach einem der vorhergehenden Ansprüche, wobei die gleitenden Montagemittel zwei Führungsschienen (40, 41) aufweisen, von denen eine Führungsschiene (40) von zwei beabstandeten Lagern (50) an dem Untergestell (44) oder dem Tischplattenelement (26) gestützt wird und die andere Führungsschiene (41) lediglich von einem Lager (51) gestützt wird, damit das Tischplattenelement weniger ruckelt, wenn es bezüglich des Untergestells gleitet.

17. Verstaubarer Tisch (25) nach einem der vorhergehenden Ansprüche, wobei die Tischplattenverbindungsmittel eine mit den Führungsmitteln (101, 104) verbundene Keilwellenführung (54) aufweisen, wobei das Untergestell (44) mit der Keilwellenführung verbunden ist.

18. Verstaubarer Tisch (25) nach Anspruch 17, wobei die Tischplattenmittel ferner zwei Riemenscheiben (60), die jeweils am Tischplattenelement (26) montiert sind, um sich um eine Riemenscheibenachse (61) zu drehen, die im Wesentlichen orthogonal zu der Gleitrichtung des Tischplattenelements verläuft, und zwei Kabel (90) aufweisen, die jeweils an einem Ende mit einem entsprechenden Ende der Keilwellenführung (54) verbunden sind, sich um eine jeweilige der Riemenscheiben erstrecken und an ihrem anderen Ende mit dem Tischplattenelement verbunden sind, wobei die Anordnung derart ist, dass eine Bewegung des Untergestells (44) an der Keilwellenführung eine entsprechende Bewegung des Tischplattenelements in derselben Richtung bezüglich des Untergestells bewirkt.

19. Verstaubarer Tisch (25) nach Anspruch 17 oder 18, wobei die Keilwellenführung (54) eine Welle (56) und eine hin- und hergehende Mutter (55), die an der Welle entlangläuft, aufweist, wobei die Welle am Mittelpunkt (67) mit einer Lokalisierungsvertiefung (68) ausgebildet ist und die Mutter einen federbelasteten Folger (76) aufweist, der in die Vertiefung gehen kann, wenn die Mutter am Mittelpunkt positioniert ist, wobei der Folger ein Eingriffsglied (83) aufweist, das so angeordnet ist, dass es normalerweise einen entsprechenden an den Montagemitteln (108) vorgesehenen Anschlag (114) in Eingriff nimmt, um eine Drehung der Tischplattenmittel (26) aus der ausgeklappten Ausrichtung in die verstaute Ausrichtung zu verhindern, außer wenn die Mutter am Mittelpunkt positioniert ist, an dem das Hineingehen des Folgers in die Vertiefung bewirkt, dass das Eingriffselement außer Eingriff mit dem Anschlag kommt, wodurch die Tischplattenmittel in die verstaute Ausrichtung am Mittelpunkt zurückgebracht werden können.

## Revendications

1. Tablette pliable (25) pour un véhicule, en particulier un avion, ladite tablette pliable comprenant:
des moyens de montage (108) adaptés pour être fixés à une structure de support (12);
des moyens de dessus de tablette comprenant un élément de dessus de tablette (26);
des moyens de connexion pour connecter lesdits moyens de dessus de tablette auxdits moyens de montage, lesdits moyens de montage comprenant des moyens de guidage (101, 104) qui sont adaptés pour permettre aux moyens de dessus de tablette de glisser sensiblement à la verticale par rapport aux moyens de montage lorsqu'ils sont placés entre une première position inférieure pliée et une deuxième position supérieure déployée, et pour permettre auxdits moyens de dessus de tablette de pivoter autour d'un axe sensiblement horizontal (56) entre une orientation dressée pliée lorsqu'ils se trouvent dans la première position pliée, et une orientation déployée sensiblement à l'horizontale lorsqu'ils se trouvent dans la position déployée;
des moyens d'encorbellement (121, 89) pour soutenir en porte-à-faux les moyens de dessus de tablette à partir des moyens de montage dans la position déployée supérieure, de telle manière que les moyens de dessus de tablette soient capables de supporter des charges dans ladite orientation déployée, lesdits moyens d'encorbellement comprenant des moyens d'engagement (121, 91) sur lesdits moyens de dessus de tablette, et des moyens de butée (132, 137) sur lesdits moyens de montage; lesdits moyens d'engagement et lesdits moyens de butée étant configurés et agencés de façon à s'engager les uns avec les autres lorsque les moyens de dessus de tablette sont pivotés vers l'orientation déployée dans la position déployée; et lesdits moyens de guidage étant en outre adaptés pour localiser les moyens de dessus de tablette dans ladite position supérieure, de telle manière que lesdits moyens d'engagement et lesdits moyens de butée s'engagent les uns avec les autres de façon stable lorsque les moyens de dessus de tablette sont pivotés vers l'orientation déployée;
**caractérisée en ce que** lesdits moyens de dessus de tablette comprennent des moyens pour connecter ledit élément de dessus de tablette auxdits moyens de guidage et fournir un mouvement réciproque latéral dudit élément de dessus de tablette par rapport auxdits moyens de guidage lorsque lesdits moyens de dessus de tablette sont disposés dans ladite position et orientation déployée, lesdits moyens de connexion du dessus de tablette sont agencés de façon à permettre audit élément de dessus de tablette de glisser dans une direction sensiblement parallèle audit axe, et dans laquelle lesdits moyens de connexion du dessus de tablette comprennent en outre un sous-châssis (44), et des moyens pour monter ledit élément de dessus de tablette coulissant sur ledit sous-châssis de façon à permettre audit élément de dessus de tablette de glisser réciproquement par rapport audit sous-châssis dans une direction sensiblement parallèle audit axe; lesdits moyens de montage coulissants comprenant une pluralité de rails de guidage espacés, sensiblement parallèles (40, 41) sur l'un, soit ledit élément de dessus de tablette (26) soit ledit sous-châssis (44), et des paliers linéaires (50, 51) sur l'autre, soit ledit sous-châssis soit ledit élément de dessus de tablette, pour porter lesdits rails de guidage.

2. Tablette pliable (25) selon la revendication 1, dans laquelle lesdits moyens d'engagement (121, 91) comprennent une pluralité de formations (135, 93) sur lesdits moyens de dessus de tablette (26) adaptés pour pivoter avec ceux-ci.

3. Tablette pliable (25) selon la revendication 2, dans laquelle lesdits moyens de butée comprennent une pluralité de plaques de butée correspondantes (132, 137).

4. Tablette pliable (25) selon la revendication 2 ou la revendication 3, dans laquelle ledit élément de dessus de tablette (26) et lesdites formations (135, 93) sont agencés de telle manière que, lorsque ledit ensemble de dessus de tablette se trouve dans l'orientation déployée, ledit élément de dessus de tablette soit saillant dans une direction avant à partir dudit axe horizontal (56) et que lesdites formations soient saillantes généralement vers l'avant à partir dudit axe et dans une direction arrière généralement opposée à partir dudit axe; lesdits moyens de butée correspondants (132, 137) étant disposés généralement devant ou derrière ledit axe, de telle manière que, dans la position et l'orientation déployée, lesdits moyens de montage (108) réagissent sur les moyens de dessus de tablette à travers lesdits moyens de butée à des positions espacées sur chaque côté dudit axe pour soutenir en porte-à-faux lesdits moyens de dessus de tablette.

5. Tablette pliable (25) selon la revendication 4, dans laquelle lesdits moyens de dessus de tablette (26) comprennent un arbre rotatif (56), ledit élément de dessus de tablette étant connecté audit arbre, et ledit arbre étant disposé sur ledit axe sensiblement horizontal; lesdites formations (135, 93) étant montées de façon fixe sur ledit arbre.

6. Tablette pliable (25) selon l'une quelconque des revendications précédentes, dans laquelle lesdits moyens de guidage (101, 104) comprennent des moyens de trajectoire (101, 104) sur lesdits moyens de montage (108), et des moyens de suivi de trajectoire (100, 103) sur lesdits moyens de dessus de tablette (26), moyens de suivi de trajectoire qui sont contraints de glisser le long desdits moyens de trajectoire pour guider lesdits moyens de dessus de tablette entre lesdites positions pliée et déployée.

7. Tablette pliable (25) selon la revendication 6, dans laquelle lesdits moyens de trajectoire (101, 104) comprennent deux trajectoires dressées espacées (101, 104), et lesdits moyens de suivi de trajectoire (100, 103) comprennent deux galets correspondants (100, 103) sur lesdits moyens de dessus de tablette (26).

8. Tablette pliable (25) selon la revendication 6 ou la revendication 7, dans laquelle lesdits moyens de suivi de trajectoire (100, 103) sont positionnés sur ledit axe horizontal (56).

9. Tablette pliable (25) selon la revendication 6, la revendication 7 ou la revendication 8, dans laquelle lesdits moyens de guidage (101, 104) comprennent en outre des moyens (120, 128) pour commander le pivotement desdits moyens de dessus de tablette (26), en fonction de la position desdits moyens de dessus de tablette entre la position inférieure pliée et la position supérieure déployée.

10. Tablette pliable (25) selon la revendication 9, dans laquelle lesdits moyens de commande de pivotement (120, 128) comprennent des moyens de came profilés (128) sur lesdits moyens de montage (108) et des moyens de suiveur de came correspondants (123) sur lesdits moyens de dessus de tablette (26); dans laquelle lesdits moyens de came et lesdits moyens de suiveur de came sont configurés et positionnés par rapport aux moyens de trajectoire (101, 104) et aux moyens de suivi de trajectoire (100, 103) de façon à positionner les moyens de dessus de tablette dans l'orientation pliée lorsqu'ils se trouvent dans la position pliée, et dans l'orientation déployée lorsqu'ils se trouvent dans la position déployée.

11. Tablette pliable (25) selon la revendication 10, dans laquelle lesdits moyens de came (128) sont configurés de façon à provoquer un pivotement progressivement plus grand des moyens de dessus de tablette (26) autour dudit axe horizontal (56) depuis l'orientation pliée jusqu'à l'orientation déployée lorsque les moyens de dessus de tablette se déplacent depuis ladite position inférieure pliée jusqu'à ladite position supérieure déployée.

12. Tablette pliable (25) selon la revendication 11, dans laquelle lesdits moyens de suivi de trajectoire (100, 103) sont positionnée sur ledit axe horizontal (56), et lesdits moyens de suivi de trajectoire (123) sont décalés dudit axe; lesdits moyens de trajectoire (101, 104) et lesdits moyens de came (128) s'étendent généralement vers le haut à partir d'extrémités inférieures respectives jusqu'à des extrémités supérieures respectives lorsqu'ils sont fixés à ladite structure de support (12), et lesdits moyens de came s'écartent des moyens de trajectoire lorsqu'ils s'étendent depuis leur extrémité inférieure jusqu'à leur extrémité supérieure afin de provoquer un pivotement progressivement plus grand des moyens de suiveur de came (123) autour dudit axe de façon à provoquer le pivotement dudit dessus de tablette (26) depuis ladite orientation pliée jusqu'à ladite orientation déployée lorsqu'il se déplace depuis ladite position pliée jusqu'à ladite position déployée.

13. Tablette pliable (25) selon l'une quelconque des revendications précédentes, dans laquelle lesdits moyens de connexion comprennent en outre des moyens (150) pour contrebalancer le poids des moyens de dessus de tablette (26) lorsqu'ils se déplacent entre lesdites positions pliée et déployée.

14. Tablette pliable (25) selon la revendication 13, dans laquelle lesdits moyens de contrepoids (150) comprennent un ressort à force constante connecté entre les moyens de dessus de tablette (26) et les moyens de montage (108).

15. Tablette pliable (25) selon l'une quelconque des revendications précédentes, dans laquelle lesdits moyens de guidage (101, 104) comprennent en outre deux crémaillères espacées (117) sur lesdits moyens de montage (108), crémaillères qui s'étendent sensiblement à la verticale lorsqu'elles sont fixées à ladite structure de support (112), et deux pignons fous correspondants (116) montés sur lesdits moyens de dessus de tablette (26) sur ledit axe horizontal (56) en engagement avec lesdites crémaillères, afin d'obtenir ainsi un mouvement souple des moyens de dessus de tablette entre lesdites positions supérieure et inférieure.

16. Tablette pliable (25) selon l'une quelconque des revendications précédentes, dans laquelle lesdits moyens de montage coulissants comprennent deux rails de guidage (40, 41), un rail de guidage (40) étant supporté par deux paliers espacés (50) sur ledit sous-châssis (44) ou sur l'élément de dessus de tablette (26), et l'autre rail de guidage (41) étant supporté par un seul palier (51), de façon à atténuer ainsi les vibrations lorsque l'élément de dessus de tablette glisse par rapport audit sous-châssis.

17. Tablette pliable (25) selon l'une quelconque des revendications précédentes; dans laquelle les moyens de connexion du dessus de tablette comprennent une cannelure à billes (54) connectée auxdits moyens de guidage (101, 104), le sous-châssis (44) étant connecté à la cannelure à billes.

18. Tablette pliable (25) selon la revendication 17, dans laquelle lesdits moyens de connexion du dessus de tablette comprennent en outre deux poulies (60), dont chacune est montée sur l'élément de dessus de tablette (26) pour pivoter autour d'un axe de poulie (61) sensiblement orthogonal à la direction de glissement dudit élément de dessus de tablette; et deux câbles (90), dont chacun est connecté par une extrémité à une extrémité respective de la cannelure à billes (54), s'étend autour d'une desdites poulies respectivement, et est connecté par son autre extrémité à l'élément de dessus de tablette, l'agencement étant tel qu'un mouvement du sous-châssis (44) sur la cannelure à billes entraîne un mouvement correspondant de l'élément de dessus de tablette dans la même direction par rapport au sous-châssis.

19. Tablette pliable (25) selon la revendication 17 ou 18, dans laquelle ladite cannelure à billes (54) comprend un arbre (56) et un écrou réciproque (55) adapté pour se mouvoir le long dudit arbre; ledit arbre étant doté d'une dépression de localisation (68) en son point milieu (67), et ledit écrou comprenant un suiveur à ressort (76) qui est adapté pour entrer dans cette dépression lorsque l'écrou est positionné audit point milieu; ledit suiveur comprenant un élément d'engagement (83) qui est agencé normalement de façon à engager une butée correspondante (114) prévue sur lesdits moyens de montage (108) de façon à empêcher le pivotement des moyens de dessus de tablette (26) depuis l'orientation déployée jusqu'à l'orientation pliée, excepté lorsque ledit écrou est positionné au point milieu où l'entrée du suiveur dans la dépression oblige ledit élément à se dégager de la butée, permettant ainsi auxdits moyens de dessus de tablette d'être ramenés à l'orientation pliée au point milieu.
